# EUROPEAN PATENT SPECIFICATION

(11) **EP 2 197 186 B1**
(45) Date of publication and mention of the grant of the patent: **17.08.2011**
(21) Application number: 09177826.6
(22) Date of filing: 03.12.2009
(51) Int. Cl.: H04M 3/00

(54) **Communication device**
Kommunikationsvorrichtung
Dispositif de communication

(30) Priority: 09.12.2008 JP 2008313231
(43) Date of publication of application: 16.06.2010
(73) Proprietor: Brother Kogyo Kabushiki Kaisha, Nagoya-shi, Aichi 467-8561 (JP)
(72) Inventor: Baba, Tsuyoshi, Nagoya-shi Aichi 467-8562 (JP)
(74) Representative: Hofer, Dorothea

(56) References cited:
- EP-A2- 0 701 361
- JP-A- 11 346 279

## Description

### TECHNICAL FIELD

The invention relates to a communication device that performs communication via a telephone line.

### BACKGROUND

A communication device that performs communication via a telephone line is conventionally known. The communication device includes a communication modem that demodulates a caller identification signal. Power supply to the communication modem is stopped at communication standby time, and power is supplied to the communication modem upon detection of a communication start signal (for example, refer to Japanese Patent Application Publication H11 -346279). According to this communication device, power consumption can be reduced by stopping power supply to the communication modem at communication standby time. In addition, power is supplied to the communication modem upon detection of the communication start signal, thereby demodulating the caller identification signal that is subsequently received.
Document EP 0 701 361 A2 discloses a communication device having a receiving section that receives the communication start signal and a caller identification signal via a telephone line. This communication device further comprises a demodulating section that demodulates the caller identification signal received by the receiving section and a detecting section that detects receipt of the communication start signal and the caller identification signal by the receiving section.

### SUMMARY

However, transmission procedures by which a telephone exchange transmits a communication start signal and a caller identification signal to a communication device are different depending on countries. Specifically, there are cases where a caller identification signal is transmitted before a communication start signal is transmitted, and where a caller identification signal is transmitted a short time period after a communication start signal is transmitted.

The conventional communication device may not be able to cope with this difference in the transmission procedures and may fail to demodulate caller identification signals.

In view of the foregoing, it is an object of the invention to provide a communication device that is capable of demodulating caller identification signals in different communication procedures and that is capable of reducing power consumption in a communication procedure in which power consumption can be reduced.

In order to attain the above and other objects, the invention provides a communication device. The communication device includes a receiving section, a demodulating section, a detecting section, an identifying section, and a control section. The receiving section receives a communication start signal and a caller identification signal via a telephone line. The demodulating section demodulates the caller identification signal received by the receiving section. The detecting section detects reception of the communication start signal and the caller identification signal by the receiving section. The identifying section identifies at least one of detection sequence and detection interval between the communication start signal and the caller identification signal based on detection results by the detecting section. The control section sets the demodulating section to one of an operable state and a standby state at subsequent communication standby time, based on identification results by the identifying section, wherein power consumption is less in the standby state than in the operable state.

Accordingly, based on at least one of the detection sequence and the detection interval between the communication start signal and the caller identification signal, the demodulating section is set to the operable state or the standby state at the subsequent communication standby time, wherein power consumption is less in the standby state than in the operable state. Thus, the caller identification signal can be demodulated even if the transmission procedure is different. In addition, power consumption can be reduced in the case of the transmission procedure in which power consumption can be reduced.

Preferably, the control section sets the demodulating section to the operable state at communication standby time, if reception of the caller identification signal is detected prior to detection of the communication start signal.

Thus, the caller identification signal can be demodulated even if the caller identification signal is transmitted prior to transmission of the communication start signal.

Preferably, the control section sets the demodulating section to the standby state regardless of whether being at communication standby time or not, if no caller identification signal is detected after reception of the communication start signal is detected.

A caller identification signal is not necessarily transmitted. According to this aspect, if reception of a caller identification signal is not detected, in other words, if no caller identification signal is transmitted, then the demodulating section is set to the standby state regardless of whether being at communication standby time or not, thereby reducing power consumption.

Here, startup time of the demodulating section is defined as a time period from when the demodulating section at the standby state is started up until the demodulating section becomes the operable state. Preferably, the control section sets the demodulating section to the operable state at communication standby time, if reception of the caller identification signal is detected within the startup time of the demodulating section after reception of the communication start signal is detected.

If the caller identification signal is transmitted a short time period after the communication start signal is transmitted, and if the demodulating section is started up upon detection of the communication start signal as the trigger, there is a possibility that the caller identification signal is received within the startup time of the demodulating section. In this case, the caller identification signal cannot be demodulated.

According to this aspect, if reception of the caller identification signal is detected within the startup time of the demodulating section after reception of the communication start signal is detected, the demodulating section is set to the operable state at communication standby time. Hence, even if the caller identification signal is transmitted a short time period after the communication start signal is transmitted, the caller identification signal can be demodulated.

More preferably, the receiving section is capable of switching between an operable state and a standby state, wherein, in the standby state, power consumption is less than in the operable state and the communication start signal can be received. The control section sets the receiving section to the standby state at communication standby time and, when the detecting section detects reception of the communication start signal at communication standby time, switches the receiving section to the operable state a certain time period after the communication start signal is detected.

When switching the receiving section to the operable state after detection of the communication start signal, the receiving section is not switched to the operable state immediately after reception of the communication start signal is detected, but is switched to the operable state a certain time period after reception of the communication start signal is detected. Thus, power consumption can be further reduced, compared with the case where the receiving section is switched to the operable state immediately after reception of the communication start signal is detected.

Preferably, the control section sets the demodulating section to the standby state at communication standby time, if reception of the caller identification signal is detected a first time period after reception of the communication start signal is detected, the first time period being longer than the startup time of the demodulating section.

Because the demodulating section is set to the standby state at communication standby time, power consumption can be reduced.

More preferably, the control section starts up the demodulating section when the detecting section detects reception of the communication start signal at communication standby time. Hence, the caller identification signal can be demodulated reliably.

Still more preferably, the control section starts up the demodulating section a second time period after reception of the communication start signal is detected at communication standby time, the second time period being obtained by subtracting the startup time of the demodulating section from the detection interval between the communication start signal and the caller identification signal.

According to this aspect, the demodulating section is not started up immediately after reception of the communication start signal is detected at communication standby time, but the demodulating section is started up the second time period after reception of the communication start signal is detected. Hence, power consumption can be further reduced.

Still more preferably, the receiving section is capable of switching between an operable state and a standby state, wherein, in the standby state, power consumption is less than in the operable state and the communication start signal can be received. The control section sets the receiving section to the standby state at communication standby time and, when the detecting section detects reception of the communication start signal at communication standby time, switches the receiving section to the operable state a certain time period after the demodulating section is started up.

In the case where the startup time of the receiving section, even if the receiving section is switched to the operable state after detection of the communication start signal, the receiving section can become the operable state prior to reception of the caller identification signal. In this case, the receiving section is set to the standby state at communication standby time, thereby further reducing power consumption.

If the startup time of the receiving section is shorter than that of the demodulating section and if the receiving section is switched to the operable state after detection of the communication start signal, then the receiving-section is switched to the operable state a certain time period after the demodulating section is started up. Hence, power consumption can be further reduced.

Preferably, the identifying section identifies the detection interval between the communication start signal and the caller identification signal based on the detection results for a plurality of times of communication.

The detection intervals between the signals can vary. Thus, if the detection interval is identified based only on the detection results obtained from one time of communication, the demodulating section may not be always controlled properly. According to this aspect, the detection interval is identified based on the detection results for a plurality of times of communication, thereby achieving more appropriate control.

Preferably, the communication device further includes a telephone-line detecting section that detects the telephone line connected to the receiving section. The control section sets the demodulating section to the standby state regardless of whether being at communication standby time or not, if the telephone-line detecting section fails to detect the telephone line. Thus, power consumption can be reduced.

### BRIEF DESCRIPTION OF THE DRAWINGS

Embodiments in accordance with the invention will be described in detail with reference to the following figures wherein:

Fig. 1 is a block diagram showing the electrical configuration of a communication device according to an embodiment of the invention;

Fig. 2 is a block diagram showing a communicating section of the communication device according to the embodiment;

Fig. 3 is a timing chart showing a communication procedure for each country;

Fig. 4A is a timing chart showing a mode (power-saving communication mode 1) of the communication device according to the embodiment;

Fig. 4B is a timing chart showing another mode (power-saving communication mode 2) of the communication device according to the embodiment;

Fig. 4C is a timing chart showing another mode (power-saving communication mode 3) of the communication device according to the embodiment;

Fig. 4D is a timing chart showing another mode (power-saving communication mode 4) of the communication device according to the embodiment; and

- Fig. 5 is a flowchart showing a mode selecting process-according to the embodiment.

### DETAILED DESCRIPTION

### <First Embodiment>

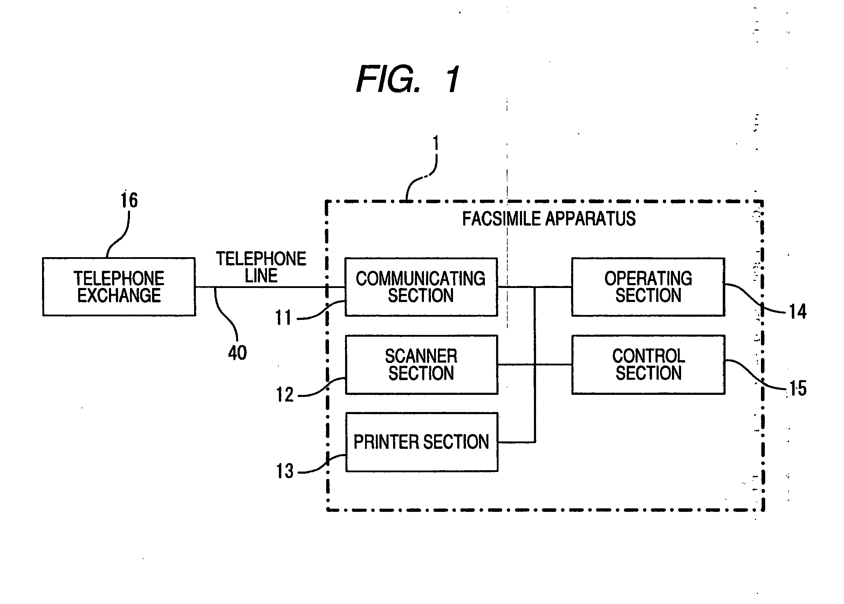

A communication device according to a first embodiment of the invention will be described while referring to Figs. 1 through 5. The communication device of the embodiment is applied to a facsimile apparatus 1.

### (1) Electrical configuration of facsimile apparatus 1

As shown in Fig. 1, the facsimile apparatus 1 (an example of a communication device) includes a communicating section 11, a scanner section 12, a printer section 13, an operating section 14, a control section 15, and the like.

The communicating section 11 is connected to a telephone exchange 16 via a telephone line 40. The communicating section 11 performs transmission/reception of image data with external facsimile apparatuses according to a predetermined facsimile communication procedure.

The scanner section 12 includes a platen on which an original is placed, an ADF (Auto Document Feeder) that conveys the original placed on the platen one sheet at a time, a linear image sensor that reads the original conveyed by the ADF, an image processing section that generates image data based on pixel signals outputted from the linear image sensor, and the like. The image data generated by the scanner section 12 is transmitted (via facsimile) by the communicating section 11.

The printer section 13 includes a paper tray in which print mediums such as print paper are placed a conveying mechanism that conveys print mediums placed in the paper tray one sheet at a time, and an image forming section that forms images on print mediums conveyed by the conveying mechanism by laser method, inkjet method, thermal transfer method, or the like. The image data received (via facsimile) by the communicating section 11 are printed on print mediums by the printer section 13.

The operating section 14 includes a plurality of buttons such as ten keys for inputting a telephone number and a transmission button for instructing facsimile transmission, an LCD (Liquid Crystal Display), and the like.

A control section 15 includes a CPU, a ROM, a RAM, and the like, and controls each section of the facsimile apparatus 1.

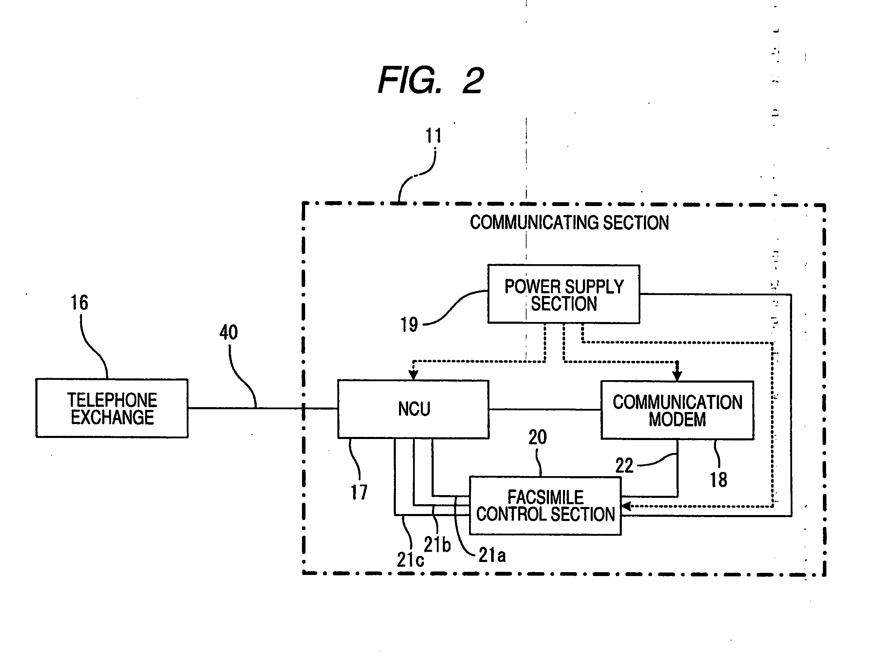

As shown in Fig. 2, the communicating section 11 includes a NCU (Network Control Unit) 17, a communication modem 18, a power supply section 19, a facsimile control section 20, and the like.

The facsimile control section 20 (an example of a detecting section, an identifying section, a control section, and a telephone-line detecting section) is made up of an ASIC. The facsimile control section 20 controls each section of the communicating section 11 to perform transmission/reception of image data, and also controls the power supply section 19 to control power supply to the NCU 17 and the communication modem 18.

The NCU 17 (an example of a receiving section, a detecting section, and a telephone-line detecting section) is connected to the telephone exchange 16 via the telephone line 40, and controls connection/disconnection of the telephone line. The NCU 17 is electrically connected to the facsimile control section 20 via a plurality of signal lines 21 (21a-21c) provided for the types of communication start signals (Ringing, 1st Ringing, polarity reversal signal, etc). Upon receiving a communication start signal from the telephone exchange 16, the NCU 17 turns on the signal line 21 corresponding to the received communication start signal. In this way, the facsimile control section 20 detects reception of the communication start signal. Further, upon receiving a DTMF (Dual Tone Multi Frequency) signal or an FSK (frequency shift keying) signal from the telephone exchange 16, the NCU 17 amplifies the received DTMF signal or FSK signal (hereinafter simply referred to as "DTMF signal") and outputs the amplified signal to the communication modem 18. The DTMF signal is, for example, a caller identification signal indicative of the telephone number of a caller.

The communication modem 18 (an example of a demodulating section and a detecting section) demodulates the DTMF signal outputted from the NCU 17 and outputs the demodulated signal to the control section 15 (see Fig. 1). The communication modem 18 is electrically connected to the facsimile control section 20 via a signal line 22 and, upon demodulating the DTMF signal, turns on the signal line 22. With this operation, the facsimile control section 20 detects reception of the DTMF signal.

The power supply section 19 (an example of a control section) supplies the NCU 17, the communication modem 18, and the facsimile control section 20 with electrical power. The facsimile control section 20 can control power supply independently to each of the NCU 17 and the communication modem 18 by controlling the power supply section 19.

The communication modem 18 becomes a standby state in which the communication modem 18 cannot demodulate a DTMF signal when power supply from the power supply section 19 is stopped, whereas the communication modem 18 becomes an operable state in which the communication modem 18 can demodulate a DTMF signal when power is supplied. A startup time is relatively long, the startup time being a required time period from when power supply to the communication modem 18 in the standby state is initiated (startup) until the communication modem 18 becomes the operable state. In the present embodiment, the startup time is 700 ms (millisecond).

The NCU 17 becomes a standby state in which the NCU 17 cannot output a DTMF signal to the communication modem 18 when power supply from the power supply section 19 is stopped, whereas the communication modem 18 becomes an operable state in which the NCU 17 can output a DTMF signal to the communication modem 18 when power is supplied. Note that, even when the NCU 17 is in the standby state, the NCU 17 can receive a communication start signal and turn on the signal line 21. Compared with the communication modem 18, the NCU 17 can return to the operable state from the standby state in a relatively short time.

In the present embodiment, the communication modem 18 becomes the standby state by stopping power supply to the communication modem 18. However, the communication modem 18 in the standby state may be supplied with power to an extent that power consumption is less than in the operable state, so that the communication modem 18 can become the operable state in a shorter startup time when the communication modem 18 is started up.

### (2) Transmission procedure of communication start signal and caller identification signal

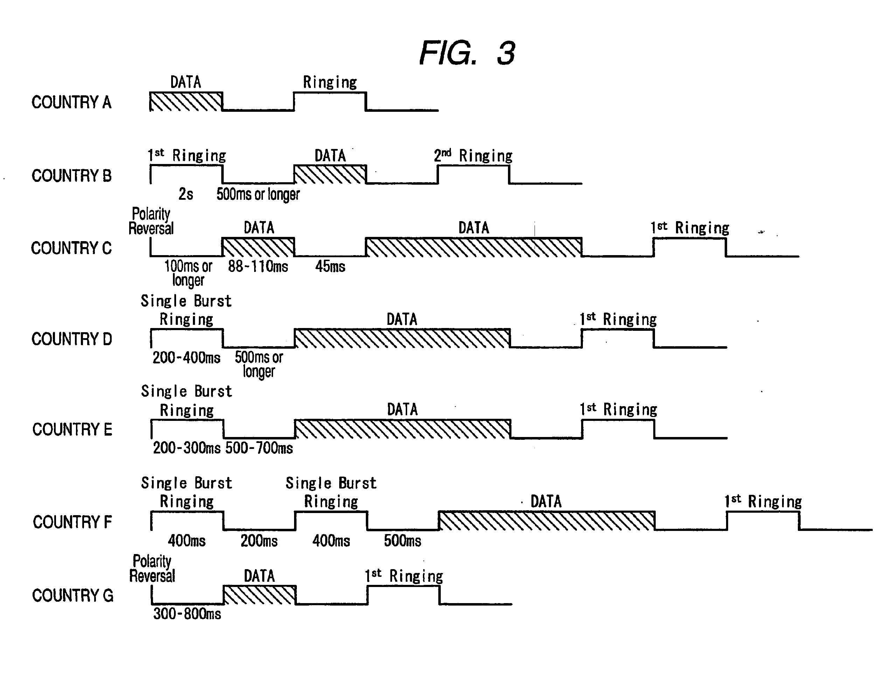

Fig. 3 is a timing chart showing transmission procedures in which a telephone exchange transmits a communication start signal and a caller identification signal to the facsimile apparatus 1. In Fig. 3, "DATA" indicates a caller identification signal, and "Ringing", "1st Ringing", "Polarity Reversal" (polarity reversal signal), and "Single Burst Ringing" indicate communication start signals in each country.

As shown in Fig. 3, the transmission procedure by which the telephone exchange transmits a communication start signal and a caller identification signal to the facsimile apparatus 1 is different depending on countries.

For example, in the case of Country A, the telephone exchange transmits a caller identification signal prior to transmitting a communication start signal (Ringing). In this case, if the communication modem 18 is set to the standby state at communication standby time, the communication modem 18 receives the caller identification signal in a state where the communication modem 18 is not operable, and thus cannot demodulate the caller identification signal. Accordingly, in the case of Country A, it is preferable that the communication modem 18 be in the operable state at communication standby time. Note that the communication standby time is defined as a state in which communication is not being performed, and the facsimile apparatus 1 is waiting for a communication start signal (or a caller identification signal in the case of Country A).

In the case of Country G, the telephone exchange transmits a caller identification signal a relatively short time period of 300ms to 800ms after transmission of a communication start signal (polarity reversal signal). For example, assume that a time period from when the communication start signal is transmitted until the caller identification signal is transmitted is 500 ms. The startup time of the communication modem 18 is 700 ms in this embodiment, as mentioned earlier. Hence, if the communication modem 18 is set to the standby state at communication standby time and if the communication modem 18 is started up after receiving the communication start signal, the caller identification signal is received before the communication modem 18 becomes the operable state and thus the caller identification signal cannot be demodulated. Accordingly, in the case of Country G, too, it is preferable that the communication modem 18 be in the operable state at communication standby time.

In the case of Country F, the telephone exchange transmits a caller identification signal a relatively long time period of 1500 ms after transmission of a communication start signal (Single Burst Ringing). In this case, if the communication modem 18 is set to the standby state at communication standby time and if the communication modem 18 is started up after receiving the communication start signal, the communication modem 18 becomes the operable state before the caller identification signal is received and thus the caller identification signal can be demodulated. Accordingly, the communication modem 18 is set to the standby state at the communication standby time, thereby reducing power consumed by the communication modem 18.

### (3) Power-saving communication mode of communication modem 18 and NCU 17

The facsimile apparatus 1 is provided with a plurality of power-saving communication modes that are selected depending on the detection sequence and detection interval of a communication start signal and a caller identification signal, so as to demodulate the caller identification signal even if the transmission procedure is different and to reduce power consumption in the case of a transmission procedure by which power consumption can be reduced.

The facsimile control section 20 sets the communication modem 18 and the NCU 17 to the operable state regardless of whether being at communication standby time or not immediately after factory shipment, for example. When facsimile reception is initially performed after the factory shipment, the facsimile control section 20 detects reception of a communication start signal and a caller identification signal, and identifies the detection sequence and the detection interval of these signals based on the detection results. Then, the facsimile control section 20 selects one of the power-saving communication modes based on the identification results.

In the present embodiment, the NCU 17 is also switchable between an operable state and a standby state. Power consumption can be further reduced if the NCU 17 is also controlled between the operable state and the standby state based on the identification results of the detection sequence and the detection interval. Hence, an example in which the state of the NCU 17 is controlled as well as the communication modem 18 is described below.

### (3-1) Power-saving communication mode 1

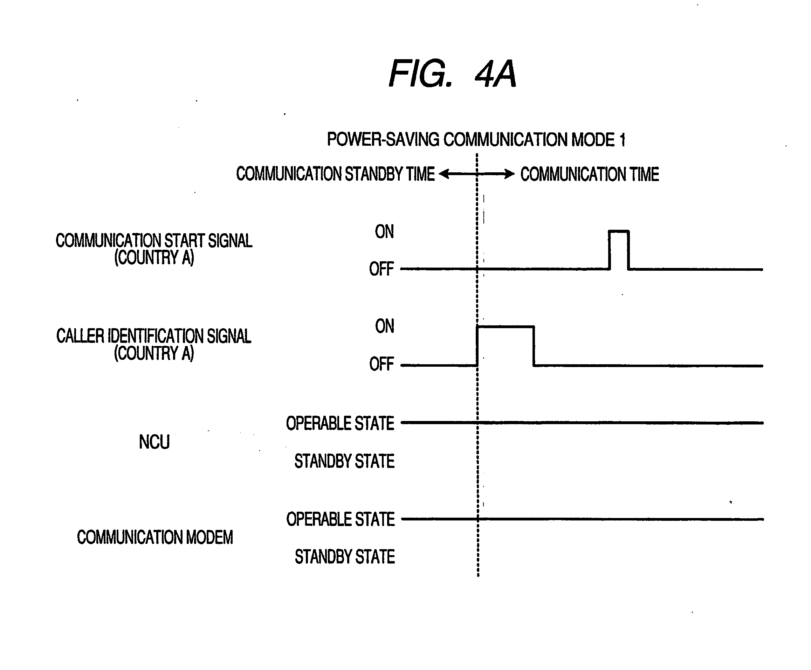

Fig. 4A shows the detection results of a communication start signal and a caller identification signal, in conjunction with each other, for Country A.

In power-saving communication mode 1, the communication modem 18 and the NCU 17 are always set to the operable state, regardless of whether being at communication standby time or not. When the caller identification signal is transmitted before the communication start signal is transmitted like Country A, power-saving communication mode 1 is selected so that the communication modem 18 and the NCU 17 are in the operable state at communication standby time and the caller identification signal can be demodulated.

### (3-2) Power-saving communication mode 2

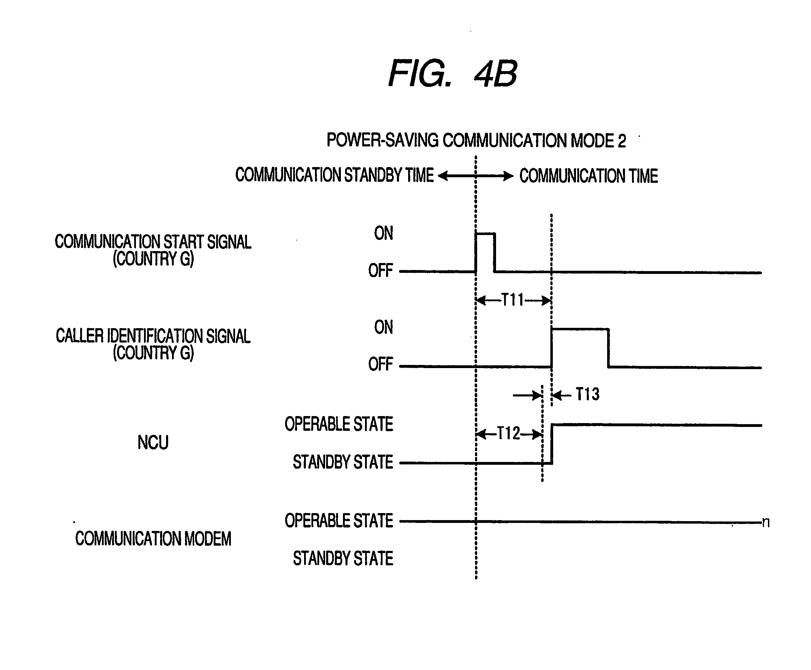

Fig. 4B shows the detection results of a communication start signal and a caller identification signal, in conjunction with each other, for Country G.

In power-saving communication mode 2, the communication modem 18 is always set to the operable state, regardless of whether being at communication standby time or not. On the other hand, the NCU 17 is set to the standby state at communication standby time and, when reception of the communication start signal is detected, the NCU 17 is started up.

When starting up the NCU 17, the facsimile control section 20 does not start up the NCU 17 immediately after reception of the communication start signal is detected, but the facsimile control section 20 starts up the NCU 17 a certain time period after reception of the communication start signal is detected. For example, the facsimile control section 20 starts up the NCU 17 when a time period T12 elapses after reception of the communication start signal is detected, the time period T12 (=T11-T13) being obtained by subtracting a startup time T13 from a detection interval T11 between the communication start signal and the caller identification signal, the startup time T13 being a time period from when the NCU 17 is started up until the NCU 17 becomes the operable state. Thus, the NCU 17 can be set to the operable state before the caller identification signal is received. In addition, power consumed by the NCU 17 can be reduced, compared with the case where the NCU 17 is started up immediately after reception of the communication start signal is detected.

When there is a possibility that a caller identification signal is transmitted within the startup time of the communication modem 18 after a communication start signal is transmitted like Country G, power-saving communication mode 2 is selected so that the caller identification signal can be demodulated and power consumed by the NCU 17 can be reduced.

### (3-3) Power-saving communication mode 3

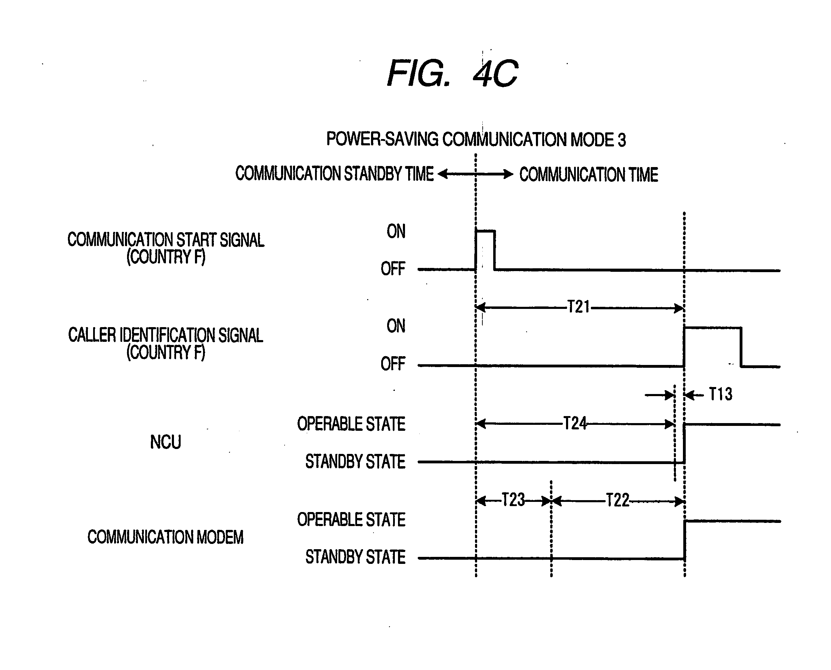

Fig. 4C shows the detection results of a communication start signal and a caller identification signal, in conjunction with each other, for Country F.

In power-saving communication mode 3, the communication modem 18 and the NCU 17 are set to the standby state at communication standby time. Then, when reception of a communication start signal is detected at communication standby time, the communication modem 18 and the NCU 17 are started up.

When starting up the communication modem 18, the facsimile control section 20 does not start up the communication modem 18 immediately after reception of the communication start signal is detected, but the facsimile control section 20 starts up the communication modem 18 a certain time period after reception of the communication start signal is detected. For example, the facsimile control section 20 starts up the communication modem 18 when a time period T23 elapses after reception of the communication start signal is detected, the time period T23 (=T21-T22) being obtained by subtracting a startup time T22 from a detection interval T21 between the communication start signal and the caller identification signal, the startup time T22 being a time period from when the communication modem 18 is started up until the communication modem 18 becomes the operable state. Thus, power consumed by the communication modem 18 can be reduced, compared with the case where the communication modem 18 is started up immediately after reception of the communication start signal is detected.

The operation of the NCU 17 is similar to that in power-saving communication mode 2. The facsimile control section 20 starts up the NCU 17 when a time period T24 elapses after reception of the communication start signal is detected at communication standby time, the time period T24 (=T21-T13) being obtained by subtracting the startup time T13 from the detection interval T21 between the communication start signal and the caller identification signal, the startup time T13 being a time period from when the NCU 17 is started up until the NCU 17 becomes the operable state.

When a caller identification signal is transmitted a time period after a communication start signal is transmitted like Country F, the time period being longer than the startup time of the communication modem 18, power-saving communication mode 3 is selected so that the caller identification signal can be demodulated and power consumed by the communication modem 18 and the NCU 17 can be reduced.

### (3-4) Power-saving communication mode 4

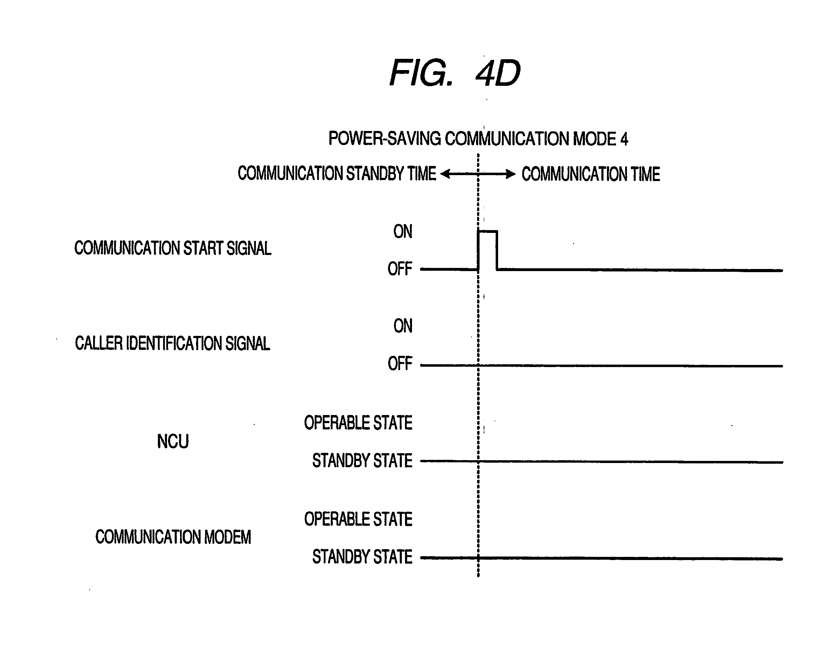

As shown in Fig. 4D, in power-saving communication mode 4, the communication modem 18 and the NCU 17 are always set to the standby state, regardless of whether being at communication standby time or not.

A caller identification signal is not necessarily transmitted, and there are cases where it is set that no caller identification signal is transmitted according to a contract between a user and a telecommunication carrier. If no caller identification signal is transmitted, power-saving communication mode 4 is selected so that power consumed by the communication modem 18 and the NCU 17 can be reduced.

### (4) Selection of power-saving communication mode

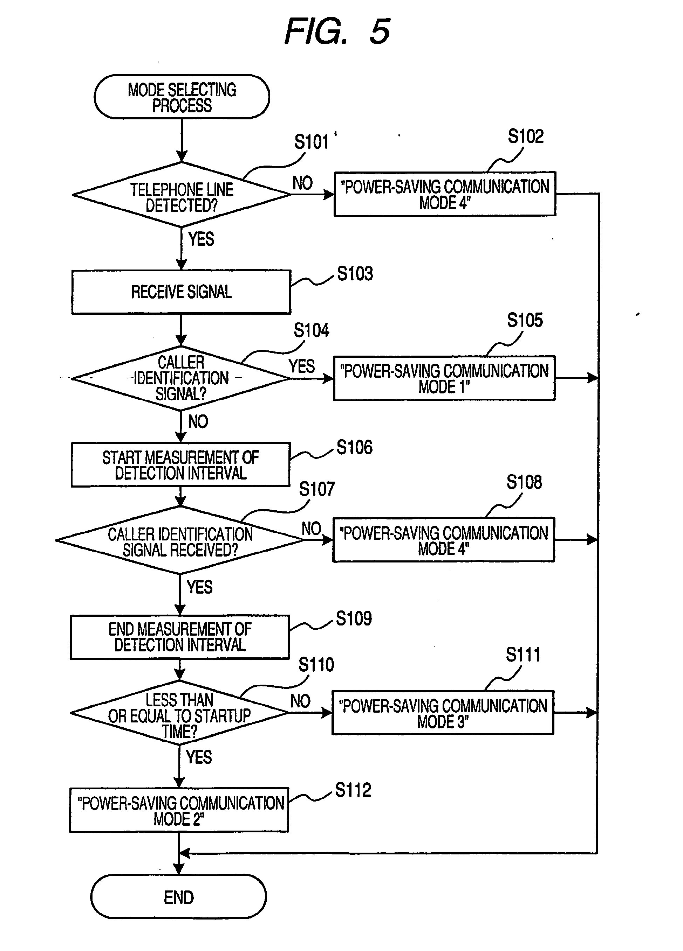

Fig. 5 is a flowchart showing a process flow for selecting one of the power-saving communication modes.

In S101, the facsimile control section 20 detects the telephone line 40 connected to the NCU 17. Specifically, for example, the facsimile control section 20 detects carrier wave (carrier) via the NCU 17 to detect the telephone line 40. The facsimile control section 20 proceeds to S 102 if the telephone line 40 is not detected, and proceeds to S 103 if the telephone line 40 is detected.

If the telephone line 40 is not detected, the NCU 17 cannot receive a caller identification signal or a communication start signal. Hence, in S102, the facsimile control section 20 selects "power-saving communication mode 4".

In S103, the facsimile control section 20 waits until either a communication start signal or a caller identification signal is received, and proceeds to S104 upon receiving either one of the signals.

In S104, the facsimile control section 20 determines which of the communication start signal and the caller identification signal is received. The facsimile control section 20 proceeds to S105 if the caller identification signal is received, and proceeds to S106 if the communication start signal is received.

In S105, the facsimile control section 20 selects "power-saving communication mode 1".

In S106, the facsimile control section 20 starts measurement of the detection interval between the communication start signal and the caller identification signal.

In S107, the facsimile control section 20 waits until the caller identification signal is received. The facsimile control section 20 proceeds to S 108 if no caller identification signal is received a certain time period after reception of the communication start signal is detected, and proceeds to S109 if the caller identification signal is received within the certain time period after reception of the communication start signal is detected.

In S108, the facsimile control section 20 determines the current transmission procedure as a transmission procedure in which no call identification signal is transmitted, and thus selects "power-saving communication mode 4".

In S 109, the facsimile control section 20 ends the measurement of the detection interval between the communication start signal and the caller identification signal.

In S110, the facsimile control section 20 determines whether the measured detection interval is less than or equal to the startup time of the communication modem 18. The facsimile control section 20 proceeds to S 112 if the detection interval is less than or equal to the startup time of the communication modem 18, and proceeds to S111 if the detection interval exceeds the startup time of the communication modem 18.

In S111, the facsimile control section 20 selects "power-saving communication mode 3".

In S112, the facsimile control section 20 selects "power-saving communication mode 2".

With the above-described processes, selection of the power-saving communication modes ends. As a result of the above-described processes, in each country shown in Fig. 3, power-saving communication modes are selected as follows. Here, assume that the detection interval between the communication start signal and the caller identification signal in Country C and Country G is less than or equal to 700 ms, and the detection interval in Country D and Country E is longer than 700 ms.
Power-saving communication mode 1··· Country A
Power-saving communication mode 2··· Country C and Country G
Power-saving communication mode 3··· Country B, Country D, Country E, and Country F

Once the facsimile control section 20 selects one of the power-saving communication modes, thereafter the facsimile control section 20 controls power supply to the NCU 17 and the communication modem 18 in accordance with settings of the selected power-saving communication mode.

### (5) Effects of the embodiment

According to the above-described facsimile apparatus 1 of the first embodiment, based on the detection sequence and the detection interval between the communication start signal and the caller identification signal, the communication modem 18 is set to the operable state or the standby state at the subsequent communication standby-time. Thus, the caller identification signal can be demodulated even if the transmission procedure is different in which the telephone exchange transmits signals to the facsimile apparatus 1.

Further, according to-the facsimile apparatus 1, if reception of a caller identification signal is detected prior to a communication start signal (Country A, for example), the communication modem 18 is set to the operable state at communication standby time (power-saving communication mode 1). Hence, the caller identification signal can be demodulated even if the caller identification signal is transmitted prior to transmission of the communication start signal.

Further, according to the facsimile apparatus 1, if no caller identification signal is detected after reception of a communication start signal is detected, the communication modem 18 is set to the standby state regardless of whether being at communication standby time or not (power-saving communication mode 4). Hence, power consumption can be reduced.

Further, according to the facsimile apparatus 1, if reception of a caller identification signal is detected within the startup time of the communication modem 18 after reception of a communication start signal is detected (Country G, for example), the communication modem 18 is set to the operable state at communication standby time (power-saving communication mode 2). Hence, even if a caller identification signal is transmitted a short time period after a communication start signal is transmitted, the caller identification signal can be demodulated.

Further, according to the facsimile apparatus 1, in power-saving communication mode 2, because the NCU 17 is set to the standby state at communication standby time, power consumption can be reduced. Also, because the NCU 17 is started up a certain time period after reception of a communication start signal is detected, power consumption can be further reduced, compared with the case where the NCU 17 is started up immediately after reception of a communication start signal is detected.

Further, according to the facsimile apparatus 1, if reception of a caller identification signal is detected a time period after reception of a communication start signal is detected, the time period being longer than the startup time of the communication modem 18 (Country F, for example), the communication modem 18 is set to the standby state at communication standby time (power-saving communication mode 3). Hence, power consumption can be reduced.

Further, according to the facsimile apparatus 1, in power-saving communication mode 3, the communication modem 18 is started up when the facsimile control section 20 detects reception- of a communication start signal at communication standby time. Hence, a caller identification signal can be demodulated

Further, according to the facsimile apparatus 1, in power-saving communication mode 3, the communication modem 18 is started up a time period after reception of a communication start signal is detected at communication standby time, the time period being obtained by subtracting the startup time of the communication modem 18 from the detection interval between the communication start signal and the caller identification signal. Thus, power consumption can be further reduced, compared with the case where the communication modem 18 is started up immediately after reception of a communication start signal is detected at communication standby time.

Further, according to the facsimile apparatus 1, in power-saving communication mode 3, because the NCU 17 is set to the standby state at communication standby time, power consumption can be further reduced. Also, if the facsimile control section 20 detects reception of a communication start signal at communication standby time, the NCU 17 is started up a certain time period after the communication modem 18 is started up. Hence, power consumption can be even further reduced.

Further, according to the facsimile apparatus 1, if the telephone line 40 is not detected, the communication modem 18 is set to the standby state regardless of whether being at communication standby time or not (power-saving communication mode 4). Hence, power consumption can be reduced.

### <Second Embodiment>

The detection intervals between communication start signals and caller identification signals can vary. Thus, if the detection interval is determined based on only one time of communication, the states of the communication modem 18 and the NCU 17 may not be controlled properly.

Accordingly, in the second embodiment, when either power-saving communication mode 2 or power-saving communication mode 3 is selected based on the detection interval between a communication start signal and a caller identification signal, the detection interval is not identified based on only one time of facsimile reception, but the detection interval is identified based on a plurality of times of facsimile reception.

Specifically, for example, according to a facsimile apparatus of the second embodiment (hereinafter simply referred to as "facsimile apparatus"), until three times of facsimile reception are performed after factory shipment, the communication modem 18 and the NCU 17 are set to the operable states regardless of whether being at communication standby time or not. Then, each time the facsimile apparatus performs facsimile reception, the facsimile apparatus measures the detection interval between a communication start signal and a caller identification signal. When the facsimile apparatus performs facsimile reception for three times, the facsimile apparatus obtains the minimum value of the detection interval among these three times of facsimile reception. The facsimile apparatus selects power-saving communication mode 2 if the obtained minimum value is less than or equal to the startup time of the communication modem 18, and selects power-saving communication mode 3 if the minimum value is longer than the startup time.

A power-saving communication mode is selected based on the minimum value of the detection intervals, because of the following reasons. For example, assume that the minimum value of the measured detection intervals is 500 ms and that the maximum value is 750 ms. A time period of 500 ms is within the startup time (700 ms) of the communication modem 18. If there is a possibility that a caller identification signal is received within the startup time of the communication modem 18, power-saving communication mode 2 should be selected so as not to fail to demodulate the caller identification signal. However, if a power-saving communication mode is selected based on a time period of 750 ms, which is the maximum value of the detection intervals, power-saving communication mode 3 is selected. Accordingly, in the present embodiment, a power-saving communication mode is selected based on the minimum value of the detection intervals.

According to the facsimile apparatus of the above-described second embodiment, the detection interval is identified based on a plurality of times of facsimile reception, thereby achieving more appropriate control.

### <Modifications>

While the invention has been described in detail with reference to the above embodiments thereof, it would be apparent to those skilled in the art that various changes and modifications may be made therein without departing from the scope of the claims.

(1) The first and second embodiments describe the cases where a power-saving communication mode is selected based on both the detection sequence and the detection interval between a communication start signal and a caller identification signal. However, a power-saving communication mode may be selected based on either one of the detection sequence and the detection interval. For example, if there is no possibility that the facsimile apparatus is used in Country A, a power-saving communication mode may be selected based only on the detection interval. For example, if the facsimile apparatus is used only in Country A or Country F, a power-saving communication mode may be selected based only on the detection sequence.

(2) The first and second embodiments describe the cases where the state of the NCU 17 as well as the communication modem 18 is controlled. However, because the power consumption of the NCU 17 is less than that of the communication modem 18, the NCU 17 may be constantly set to the operable state.

-(3) The first embodiment describes the case where, in power-saving communication modes 2 and 3, the NCU 17 is started up a certain time period after a communication start signal is received. However, the NCU 17 may be started up immediately after a communication start signal is received.

(4) The first embodiment describes the case where, in power-saving communication mode 3, the communication modem 18 is started up a certain time period after a communication start signal is received. However, the communication modem 18 may be started up immediately after a communication start signal is received.

(5) The first embodiment describes the case where selection of a power-saving communication mode is performed at the first facsimile reception after factory shipment. For example, however, selection of a power-saving communication mode may be performed every time the facsimile apparatus is powered on.

(6) The first and second embodiments describe the facsimile apparatus as an example of a communication device. However, the invention may be applied to a so-called multifunction device having a scanner function, a printer function, a copier function, and a facsimile function. Alternatively, the invention may be applied to a telephone having a function of displaying a caller's telephone number (data obtained by demodulating a caller identification signal), for example.

## Claims

1. A communication device (1) comprising:
a receiving section (17) that receives a communication start signal and a caller identification signal via a telephone line;
a demodulating (18) section that demodulates the caller identification signal received by the receiving section; and
a detecting section (17.18.20) that detects reception of the communication start signal and the caller identification signal by the receiving section;
**characterized by**
an identifying section (20) that identifies at least one of detection sequence and detection interval between the communication start signal and the caller identification signal based on detection results by the detecting section; and
a control section (19,20) that sets the demodulating sections to one of an operable state and a standby state at subsequent communication standby time, based on identification results by the identifying section (20), wherein power consumption is less in the standby state than in the operable state.

2. The communication device (1) according to claim 1, wherein the control section 19, 20 sets the demodulating section (18) to the operable state at communication standby time, if reception of the caller identification signal is detected prior to detection of the communication start signal.

3. The communication device (1) according to claim 1 or 2, wherein the control section (19, 20) sets the demodulating section (18) to the standby state regardless of whether being at communication standby time or not, if no caller identification signal is detected after reception of the communication start signal is detected.

4. The communication device(1) according to any of claims 1 to 3, wherein startup time of the demodulating section (18) is defined as a time period from when the demodulating section (18) at the standby state is started up until the demodulating section (18) becomes the operable state; and
wherein the control section (19, 20) sets the demodulating sections to the operable state at communication standby time, if reception of the caller identification signal is detected within the startup time of the demodulating section (18) after reception of the communication start signal is detected.

5. The communication device (1) according to any of claims 1 to 4, wherein the receiving section (17) is capable of switching between an operable state and a standby state, wherein, in the standby state, power consumption is less than in the operable state and the communication start signal can be received; and
wherein the control section (19, 20) sets the receiving section (17) to the standby state at communication standby time and, when the detecting section (17,18,20) detects reception of the communication start signal at communication standby time, switches the receiving section (17) to the operable state a certain time period after the communication start signal is detected.

6. The communication device (1) according to any of claims 1 to 5, wherein startup time of the demodulating section (18) is defined as a time period from when the demodulating section (18) at the standby state is started up until the demodulating section (18) becomes the operable state; and
wherein the control section (19, 20) sets the demodulating section (18) to the standby state at communication standby time, if reception of the caller identification signal is detected a first time period after reception of the communication start signal is detected, the first time period being longer than the startup time of the demodulating section (18).

7. The communication device (1) according to claim 6, wherein the control section (19,20) starts up the demodulating section (18) when the detecting section (17), 18,20) detects reception of the communication start signal at communication standby time.

8. The communication device (1) according to claim 6, wherein the control section (19,20) starts up the demodulating section (18) a second time period after reception of the communication start signal is detected at communication standby time, the second time period being obtained by subtracting the startup time of the demodulating section (18) from the detection interval between the communication start signal and the caller identification signal.

9. The communication device (1) according to claim 6, wherein the receiving section (17) is capable of switching between an operable state and a standby state, wherein, in the standby state, power consumption is less than in the operable state and the communication start signal can be received; and
wherein the control section (19, 20) sets the receiving section 7 to the standby state at communication standby time and, when the detecting section (17,18,20) detects reception of the communication start signal at communication standby time, switches the receiving sections to the operable state a certain time period after the demodulating section (18) is started up.

10. The communication device (1) according to anyone of claims 1 through 9, wherein the identifying section (20) identifies the detection interval between the communication start signal and the caller identification signal based on the detection results for a plurality of times of communication.

11. The communication device (1) according to any of claims 1 to 10, further comprising a telephone-line detecting section (17, 20) that detects the telephone line connected to the receiving section,
wherein the control section (19, 20) sets the demodulating section (18) to the standby state regardless of whether being at communication standby time or not, if the telephone-line detecting section fails to detect the telephone line.

12. The communication device (1 according to any of claims 1 to 11. wherein the detection sequence indicates which of the communication start signals and the caller identification signal is received first.

## Patentansprüche

1. Eine Kommunikationsvorrichtung (1), die aufweist:
einen Empfangsabschnitt (17), der ein Kommunikationsbeginnsignal und ein Anruferidentifikationssignal über eine Telefonleitung empfängt;
einen Demodulationsabschnitt (18), der das durch den Empfangsabschnitt empfangene Anruferidentifikationssignal demoduliert; und
einen Erfassungsabschnitt (17, 18, 20), der den Empfang des Kommunikationsbeginnsignals und des Anruferidentifikationssignals durch den Empfangsabschnitt erfasst;
**gekennzeichnet durch**
einen Identifizierungsabschnitt (20), der die Erfassungssequenz und/oder den Erfassungsabstand zwischen dem Kommunikationsbeginnsignal und dem Anruferidentifikationssignal basierend auf dem Erfassungsergebnis **durch** den Erfassungsabschnitt identifiziert; und
einen Steuerabschnitt (19, 20), der den Demodulationsabschnitt (18) entweder in einen Betriebszustand oder einen Bereitschaftszustand bei nachfolgender Kommunikationsbereitschaftszeit basierend auf den Identifikationsergebnissen durch den Identifikationsabschnitt (20) versetzt, wobei bei dem Bereitschaftszustand der Energieverbrauch geringer ist als in dem Betriebszustand.

2. Die Kommunikationsvorrichtung (1) gemäß Anspruch 1, wobei die Steuervorrichtung (19, 20) den Demodulationsabschnitt (18) während der Kommunikationsbereitschaftszeit in den Betriebszustand versetzt, wenn der Empfang des Anruferidentifikationssignals vor der Erfassung des Kommunikationsbeginnsignals erfasst wird.

3. Die Kommunikationsvorrichtung (1) gemäß Anspruch 1 oder 2, wobei der Steuerabschnitt (19, 20) den Demodulationsabschnitt (18) unabhängig davon, ob Kommunikationsbereitschaftszeit vorliegt oder nicht, in den Bereitschaftszustand versetzt, wenn kein Anruferidentifikationssignal nach dem Empfang des Kommunikationsbeginnsignals erfasst wird.

4. Die Kommunikationsvorrichtung (1) gemäß einem der Ansprüche 1 bis 3, wobei die Anlaufzeit des Demodulationsabschnitts (18) als Zeitdauer von dann, wenn der Demodulationsabschnitt (18) im Bereitschaftszustand hochgefahren wird, bis der Demodulationsabschnitt (18) in den Betriebszustand eintritt, definiert ist; und
wobei der Steuerabschnitt (19, 20) den Demodulationsabschnitt (18) in der Kommunikationsbereitschaftszeit in den Betriebszustand versetzt, wenn der Empfang des Anruferidentifikationssignals während der Anlaufzeit des Demodulationsabschnitts (18) nach Empfang des Kommunikationsbeginnsignals erfasst wird.

5. Die Kommunikationsvorrichtung (1) gemäß einem der Ansprüche 1 bis 4, wobei der Empfangsabschnitt (17) dazu in der Lage ist, zwischen einem Betriebszustand und einem Bereitschaftszustand umzuschalten, wobei in dem Bereitschaftszustand der Energieverbrauch geringer ist als in dem Betriebszustand und das Kommunikationsbeginnsignal empfangen werden kann; und
wobei der Steuerabschnitt (19, 20) den Empfangsabschnitt (17) zur Kommunikationsbereitschaftszeit in den Bereitschaftszustand versetzt und dann, wenn der Erfassungsabschnitt (17, 18, 20) den Empfang des Kommunikationsbeginnsignals zur Kommunikationsbereitschaftszeit erfasst, den Empfangsabschnitt (17) eine bestimmte Zeitdauer nachdem das Kommunikationsbeginnsignal erfasst wurde, in den Betriebszustand schaltet.

6. Die Kommunikationsvorrichtung (1) gemäß einem der Ansprüche 1 bis 5, wobei die Anlaufzeit des Demodulationsabschnitts (18) als Zeitdauer von dann, wenn der Demodulationsabschnitt (18) in dem Bereitschaftszustand hochgefahren wird, bis dann, wenn der Demodulationsabschnitt (18) in den Betriebszustand eintritt, definiert ist; und
wobei der Steuerabschnitt (19, 20) den Demodulationsabschnitt (18) zur Kommunikationsbereitschaftszeit in den Bereitschaftszustand versetzt, wenn der Empfang des Anruferidentifikationssignals nach einer ersten Zeitdauer, nachdem der Empfang des Kommunikationsbeginnsignals erfasst wurde, erfasst wurde, wobei die erste Zeitdauer länger ist, als die Anlaufzeit des Demodulationsabschnitts (18).

7. Die Kommunikationsvorrichtung (1) gemäß Anspruch 6, wobei der Steuerabschnitt (19, 20) den Demodulationsabschnitt (18) hochfährt, wenn der Erfassungsabschnitt (17, 18, 20) den Empfang des Kommunikationsstartsignals zur Kommunikationsbereitschaftszeit erfasst.

8. Die Kommunikationsvorrichtung (1) gemäß Anspruch 6, wobei der Steuerabschnitt (19, 20) den Demodulationsabschnitt (18) nach einer zweiten Zeitdauer, nachdem der Empfang des Kommunikationsstartsignals zur Kommunikationsbereitschaftszeit empfangen wurde, hochfährt, wobei die zweite Zeitdauer **dadurch** erhalten wird, dass die Anlaufzeit des Demodulationsabschnitts (18) von der Erfassungsdauer zwischen dem Kommunikationsbeginnsignal und dem Anruferidentifikationssignal subtrahiert wird.

9. Die Kommunikationsvorrichtung (1) gemäß Anspruch 6, wobei der Empfangsabschnitt (17) dazu in der Lage ist, zwischen einem Betriebszustand und einem Bereitschaftszustand umzuschalten, wobei in dem Bereitschaftszustand der Energieverbrauch geringer ist als in dem Betriebszustand und das Kommunikationsbeginnsignal empfangen werden kann; und
wobei der Steuerabschnitt (19, 20) den Empfangsabschnitt (17) zur Kommunikationsbereitschaftszeit in den Bereitschaftszustand versetzt und dann, wenn der Erfassungsabschnitt (17, 18, 20) den Empfang des Kommunikationsbeginnsignals zur Kommunikationsbereitschaftszeit erfasst, den Empfangsabschnitt (17) um eine bestimmte Zeitdauer nachdem der Demodulationsabschnitt (18) hochgefahren wurde, in den Betriebszustand versetzt.

10. Die Kommunikationsvorrichtung (1) gemäß einem der Ansprüche 1 bis 9, wobei der Identifizierungsabschnitt (20) das Erfassungsintervall zwischen dem Kommunikationsbeginnsignal und dem Anruferidentifikationssignal basierend auf dem Erfassungsergebnis für eine Vielzahl von Kommunikationsvorgängen identifiziert.

11. Die Kommunikationsvorrichtung (1) gemäß einem der Ansprüche 1 bis 10, die ferner einen Telefonleitungserfassungsabschnitt (17, 20) aufweist, der die Telefonleitung erfasst, die mit dem Empfangsabschnitt verbunden ist,
wobei der Steuerabschnitt (19, 20) den Demodulationsabschnitt (18) unabhängig vom Vorliegen oder Nichtvorliegen der Kommunikationsbereitschaftszeit in den Bereitschaftszustand versetzt, wenn der Telefonleitungserfassungsabschnitt die Telefonleitung nicht erfassen kann.

12. Die Kommunikationsvorrichtung (1) gemäß einem der Ansprüche 1 bis 11, wobei die Erfassungsabfolge anzeigt, welcher aus Kommunikationsbeginnsignal und Anruferidentifikationssignal zuerst erfasst wurde.

## Revendications

1. Dispositif de communication (1) comprenant :
une section de réception (17) qui reçoit un signal de début de communication et un signal d'identification d'appelant par l'intermédiaire d'une ligne téléphonique ;
une section de démodulation (18) qui démodule le signal d'identification d'appelant reçu par la section de réception ; et
une section de détection (17, 18, 20) qui détecte la réception du signal de début de communication et du signal d'identification d'appelant par la section de réception;
**caractérisé par**
une section d'identification (20) qui identifie au moins l'un d'une séquence de détection et d'un intervalle de détection entre le signal de début de communication et le signal d'identification d'appelant sur la base des résultats de détection de la section de détection ; et
une section de commande (19, 20) qui met la section de démodulation (18) dans l'un d'un état utilisable et d'un état d'attente pendant le temps d'attente de communication suivante, sur la base des résultats d'identification de la section d'identification (20), dans lequel la consommation d'énergie est plus faible dans l'état d'attente que dans l'état utilisable.

2. Dispositif de communication (1) selon la revendication 1, dans lequel la section de commande (19, 20) met la section de démodulation (18) dans l'état utilisable pendant le temps d'attente de communication, si la réception du signal d'identification d'appelant est détectée avant la détection du signal de début de communication.

3. Dispositif de_communication_(1) selon la revendication 1 ou_ 2, dans lequel la section de commande (19, 20) met la section de démodulation (18) dans l'état d'attente indépendamment du fait que le dispositif est ou non dans le temps d'attente de communication, si aucun signal d'identification d'appelant n'est détecté après la détection de la réception du signal de début de communication.

4. Dispositif de communication (1) selon l'une quelconque des revendications 1 à 3, dans lequel le temps de démarrage de la section de démodulation (18) est défini en tant que période de temps de l'instant auquel la section de démodulation (18) dans l'état d'attente est démarrée jusqu'à l'instant auquel la section de démodulation (18) passe dans l'état utilisable ; et
dans lequel la section de commande (19, 20) met la section de démodulation (18) dans l'état utilisable pendant le temps d'attente de communication, si la réception du signal d'identification d'appelant est détectée avant le temps de démarrage de la section de démodulation (18) après la détection de la réception du signal de début de communication.

5. Dispositif de communication (1) selon l'une quelconque des revendications 1 à 4, dans lequel la section de réception (17) est capable de commuter entre un état utilisable et un état d'attente, dans lequel, dans l'état d'attente, la consommation d'énergie est plus faible que dans l'état utilisable et le signal de début de communication peut être reçu ; et
dans lequel la section de commande (19, 20) met la section de réception (17) dans l'état d'attente pendant le temps d'attente de communication et, lorsque la section de détection (17, 18, 20) détecte la réception du signal de début de communication pendant le temps d'attente de communication, commute la section de réception (17) dans l'état utilisable une certaine période de temps après la détection du signal de début de communication.

6. Dispositif de communication (1) selon l'une quelconque des revendications 1 à 5, dans lequel le temps de démarrage de la section de démodulation (18) est défini en tant que période de temps de l'instant auquel la section de démodulation (18) dans l'état d'attente est démarrée jusqu'à l'instant auquel la section de démodulation (18) passe dans l'état utilisable ; et
dans-lequel la section de- commande (19, 20) met la section de démodulation (18) dans l'état d'attente pendant le temps d'attente de communication, si la réception du signal d'identification d'appelant est détectée une première période de temps après la détection de la réception du signal de début de communication, la première période de temps étant plus longue que le temps de démarrage de la section de démodulation (18).

7. Dispositif de communication (1) selon la revendication 6, dans lequel la section de commande (19, 20) démarre la section de démodulation (18) lorsque la section de détection (17, 18, 20) détecte la réception du signal de début de communication pendant le temps d'attente de communication.

8. Dispositif de communication (1) selon la revendication 6, dans lequel la section de commande (19, 20) démarre la section de démodulation (18) une deuxième période de temps après la détection de la réception du signal de début de communication pendant le temps d'attente de communication, la deuxième période de temps étant obtenue en soustrayant le temps de démarrage de la section de démodulation (18) de l'intervalle de détection entre le signal de début de communication et le signal d'identification d'appelant.

9. Dispositif de communication (1) selon la revendication 6, dans lequel la section de réception (17) est capable de commuter entre un état utilisable et un état d'attente, dans lequel, dans l'état d'attente, la consommation d'énergie est plus faible que dans l'état utilisable et le signal de début de communication peut être reçu ; et
dans lequel la section de commande (19, 20) met la section de réception (17) dans l'état d'attente pendant le temps d'attente de communication, et, lorsque la section de détection (17, 18, 20) détecte la réception du signal de début de communication pendant le temps d'attente de communication, commute la section de réception (17) dans l'état utilisable une certaine période de temps après le démarrage de la section de démodulation (18).

10. Dispositif de communication (1) selon l'une quelconque des revendications 1 à 9, dans lequel la section d'identification (20) identifie l'intervalle de détection entre le signal de début de communication et le signal d'identification d'appelant sur la base des résultats de détection pour une pluralité de temps de communication.

11. Dispositif de communication (1) selon l'une quelconque des revendications 1 à 10, comprenant en outre une section de détection de ligne téléphonique (17, 20) qui détecte la ligne téléphonique connectée à la section de réception,
dans lequel la section de commande (19, 20) met la section de démodulation (18) dans l'état d'attente indépendamment du fait que le dispositif est ou non dans le temps d'attente de communication, si la section de détection de ligne téléphonique ne détecte pas la ligne téléphonique.

12. Dispositif de communication (1) selon l'une quelconque des revendications 1 à 11, dans lequel la séquence de détection indique lequel du signal de début de communication et du signal d'identification d'appelant est reçu en premier.
